# EUROPEAN PATENT APPLICATION

(11) **EP 0 688 816 A1**
(43) Date of publication of application: **27.12.1995**
(21) Application number: 95303942.7
(22) Date of filing: 08.06.1995
(51) Int. Cl.: C08K 3/32, C08K 5/49, C08K 5/17

(54) **Low-color polymer**

(30) Priority: 22.06.1994 US 263581
(71) Applicant: ROHM AND HAAS COMPANY, Philadelphia, Pennsylvania 19106-2399 (US)
(72) Inventor: Winkle, Mark Robert, Lansdale, Pennsylvania 19446 (US)
(74) Representative: Tanner, James Percival

(57) **Abstract**

Low-color polymer solutions, dispersions, emulsions and films containing iron compounds are provided. A method for reducing or eliminating the discoloration of polymer solutions, dispersions, emulsions and films due to iron-containing compounds is accomplished by additives at a level of from 10 to 5,000 ppm based on the polymer. These low-color polymers are particularly useful in coating applications, such as latex paints.

## Description

The present invention relates to low-color polymer. In particular, the present invention relates to low-color polymer solutions, dispersions, emulsions and films containing iron compounds.

Many iron compounds are highly colored. When such iron compounds are present in a polymer solution, dispersion, emulsion or film, these iron compounds may lead to unwanted color. Furthermore, iron compounds tend to impart color to polymer solutions, dispersions, emulsions and films even when the iron compounds are present at low concentrations. This is undesirable when the appearance of the polymer is an important property, as it is in certain coating applications, such as latex paints.

Iron may be introduced into a polymer solution, dispersion, emulsion or film from a variety of sources. It might be introduced intentionally, for example, as a catalyst or as part of a redox system. Iron may also be introduced into a polymer solution, dispersion or emulsion during the preparation of the polymer, for example, from the plumbing or the reaction vessel. Iron may also be introduced into a polymer solution, dispersion or emulsion during the preparation of the polymer, for example, as a contaminant in one or more of the raw materials. Iron may also be introduced into a polymer film from the substrate onto which the polymer solution, dispersion or emulsion is applied.

Discoloration of polymer solutions, dispersions and emulsions is particularly troublesome under conditions of a basic pH. Iron at lower oxidation states readily oxidizes to Fe (III) under these conditions and hydrous iron (III) oxide is favored. Because many polymerizations are conducted under acid conditions, discoloration may not occur until the polymer is neutralized. The discoloration may or may not be noticeable in the polymer solution, dispersion or emulsion, but will be noticeable in a dried film of the polymer. Since many polymers are ultimately dried in their final use, this makes discoloration a serious problem. It is particularly troublesome in polymer films where color or clarity are critical properties, such as in a latex paint.

US-A-3,556,968 to DeVittorio describes a method of inhibiting the discoloration of electrodeposited organic coatings by treating the substrate with a chelating agent or by incorporating the chelating agent into the coating composition. The total solids level of the electrodepositable coating compositions is preferably from 5 percent to 15 percent by weight. The concentration of the chelating agent in the coating composition is taught as being preferably within the range of 0.1 percent to 1 percent.

The method taught by DeVittorio suffers the drawbacks of introducing a relatively large amount of chelant into the coating composition which thereby introduces large amounts of contaminants into the composition. This method also has the associated expense of the large amounts of chelants. In addition, there is a need to be able to control the discoloration of polymer solutions, dispersion and emulsions of considerably higher total solids.

The present invention seeks to overcome the problems associated with the previously known methods for addressing the discoloration of polymer solutions, dispersion and emulsions, and films formed therefrom.

In a first aspect of the present invention, there is provided a composition comprising
(a) at least one polymer at a level of from 30 to 70 percent by weight of the composition;
(b) at least one solvent at a level of from 30 to 70 percent by weight of the composition;
(c) at least one iron-containing compound at a level of from 1 to 10,000 parts per million ("ppm") based on the composition;
(d) at least one additive selected from the group consisting of
   1) phosphoric acid
   2) phosphates
   3) polyphosphates
   4) n-phosphonoalkyl-n-carboxylic acids
   5) *gem*-diphosphonoalkanes
   6) *gem*-diphosphonohydroxyalkanes
   7) compounds containing one or more aminedi(methylenephosphonic acid) moieties
   8) compounds soluble in the solvent of the composition which have two or more pendant phosphate monoester moieties
   9) compounds containing one or more aminedi(methylenephosphonic acid) moieties
   10) compounds containing one or more aminedi(methylenecarboxylic acid) moieties
      and alkali metal and ammonium salts thereof;
wherein the additive is present in the composition at a level of from 10 to 5,000 ppm based on the polymer.

In a second aspect of the present invention, there is provided a film comprising
(a) at least one polymer at a level of from 30 to 99.99 percent by weight of the film;
(b) optionally, at least one pigment at a level of from 0 to 70 percent by weight of the film;
(c) at least one iron-containing compound at a level of from 2 to 20,000 ppm based on the film;
(d) at least one additive selected from the additives set forth above wherein the additive is present in the composition at a level of from 10 to 5,000 ppm based on the polymer.

In a third aspect of the present invention, there is provided a method for reducing the discoloration of iron-containing polymer compositions, comprising adding to a polymer composition an effective amount of at least one of the additives set forth above.

Polymers useful in the present invention may be prepared, for example, by emulsion polymerization processes, and are referred to as "emulsion polymers". Polymers useful in the present invention may also be prepared, for example, by solution polymerization processes, and are referred to as "solution polymers." The monomer composition of the emulsion polymers and solution polymers is not critical for the present invention. The preferred monomer compositions will depend upon the intended use of the polymer. For example, polymers intended for use in a latex paint will probably contain, as polymerized units, from 50 to 99 percent by weight of one or more alkyl esters or hydroxyalkyl esters of acrylic or methacrylic acid, from 0 to 10 percent by weight of one or more acid-containing monomers or salts thereof, from 0 to 40 percent by weight of one or more other ethylenically unsaturated monomers, and from 0 to 20 percent by weight of one more polyethylenically unsaturated monomers. Similarly, the molecular weight of the emulsion polymers and solution polymers is not critical for the present invention. The preferred molecular weight will depend upon the intended use of the polymer and may range from 1,000 to several million. The morphology of the polymers is not critical for the present invention. For example, emulsion polymers useful in the present invention may be spherical or oblong, and may contain a wide or narrow particle size distribution which can be unimodal, bimodal or polymodal. The particular process parameters used to make the emulsion polymers or solution polymers are also not critical to the present invention. Polymers useful in the present invention may be prepared, for example, by batch, semi-continuous or continuous processes, and the monomer feeds may be continuous or intermittent, concurrent, staged or sequential. The level of polymer in the compositions of the present invention is from 30 to 70 percent by weight of the composition, preferably from 40 to 65 percent by weight of the composition.

The solvent useful in the present invention is capable of dissolving, suspending or maintaining an emulsion of the polymer, or is capable of suspending the optional pigment, or a combination thereof. In general, the solvent used for the polymerization of the polymer is the solvent for the composition of the present invention. However, it is possible to add additional solvent, or one or more other solvents or a combination thereof to the polymer solution, suspension or emulsion. In another embodiment of the present invention, the solvent is added to the polymer after the polymer has been isolated. The solvent may be water, alcohol, other organic solvents or a combination thereof. Preferably, the solvent is water. The solvent is present in the composition of the present invention at a level of from 30 to 70 percent by weight of the composition, preferably from 35 to 60 percent by weight of the composition.

The iron-containing compound may be, for example, iron metal, iron oxides, iron salts or a combination thereof. The iron-containing compound may be introduced into the composition from a variety of sources. It might be introduced intentionally, for example, as a catalyst or as part of a redox system during the preparation of the polymer. The iron-containing compound may also be introduced, for example, from the plumbing or the reaction vessel used in the production of the polymer. The iron-containing compound may also be introduced into the polymer, for example, as a contaminant in one or more of the raw materials. The iron-containing compound may also be introduced into the composition from the substrate onto which the polymer is applied, or from the optional at least one pigment. The iron-containing compound is present in the composition of the present invention at a level of from 1 to 10,000 ppm, preferably from 2 to 5,000 ppm based on the composition.

The compositions of the present invention optionally contain at least one pigment. The type of pigment, when used, will depend upon the use of the composition. For example, if the composition is to be used as a paint, the optional at least one pigment may be titanium dioxide, calcium carbonate, other conventional pigments, or a combination thereof. The compositions of the present invention may contain at least one pigment at a level of from 0 to 70 percent by weight, preferably from 20 to 55 percent by weight of the composition.

The additives useful in the present invention include phosphoric acid, phosphates and polyphosphates. Specific examples include phosphoric acid, phosphate, pyrophosphate, tripolyphosphate, hexametaphosphate, tetrametaphosphate, pentametaphosphate and alkali metal and ammonium salts thereof. Other useful additives include n-phosphonoalkyl-n-carboxylic acids, such as, for example, phosphonoacetic acid, 2-phosphonobutane-1,2,4-tricarboxylic acid, 2-hydroxy-2-phosphonoacetic acid and alkali metal and ammonium salts thereof. Other useful additives include *gem*-diphosphonoalkanes and *gem*-diphosphonohydroxyalkanes, such as, for example, methylenediphosphonic acid, 1-hydroxyethylidene-1,1-diphosphonic acid and alkali metal and ammonium salts thereof. Other useful additives include compounds containing one or more aminedi(methylenephosphonic acid) moieties. Aminedi(methylenephosphonic acid) moieties are moieties of the formula -N(CH₂PO₃X₂)₂ wherein X is hydrogen, NH₄ or an alkali metal. Specific examples of such compounds include, aminotris(methylenephosphonic acid), ethylenediaminetetrakis(methylenephosphonic acid), diethylenetriamine-N,N,N',N'',N''-penta(methylene phosphonic acid) and alkali metal and ammonium salts thereof. Other suitable additives include compounds soluble in the solvent of the composition which have two or more pendant phosphate monoester moieties. Such compounds include, for example, polymers soluble in the solvent of the composition which have two or more pendant phosphate monoester moieties may be prepared, for example, by functionalizing a polymer to contain such pendant phosphate monoester moieties, or by preparing polymers having, as polymerized units, phosphate monoester-containing monomers, such as, for example, phosphoethylmethacrylate, vinylphosphonic acid and allylphosphonic acid. Other suitable additives include compounds containing one or more aminedi(methylenecarboxylic acid) moieties. Aminedi(methylenecarboxylic acid) moieties are moieties of the formula -N(CH₂CO₂X)₂ wherein X is hydrogen, NH₄ or an alkali metal. Specific examples of such compounds include N-(2-hydroxyethyl)ethylenediaminetriacetic acid, ethylenediaminetetraacetic acid, nitrilotris(methylenecarboxylic acid) and alkali metal and ammonium salts thereof.

The additive, or combination of additives, is added to a level where it is effective at reducing the discoloration of iron-containing polymer compositions. The level of the at least one additive is generally from 10 to 5,000 ppm based on the polymer, preferably from 25 to 2,000 ppm based on the polymer.

The time at which the additive is added is not critical to the present invention. For example, the additive can be introduced separately or as a component of one or more of the components of the polymerization. Preferably, the additive is introduced after polymerization of the polymer is complete. Preferably, the at least one additive is added while the pH is acidic. In a more preferred embodiment of the present invention, the additive is added to a polymer emulsion after the polymerization is complete, followed by neutralization of the polymer emulsion to a basic pH.

The compositions of the present invention are particularly useful where it is desirable to reduce or eliminate the discoloration due to iron-containing compounds. The compositions are particularly useful, for example, as coatings. Coatings are prepared by applying the compositions of the present invention to a substrate by any of several methods including, for example, painting, spraying, dipping, calendaring, wiping and the like. Coatings of the present invention include, for example, paints, adhesives, caulks, sealants, polishes, and varnishes. In general, after the compositions of the present invention are applied to a substrate, the solvent of the composition is removed and a film is formed.

### Example 1

A polymer emulsion was prepared by aqueous emulsion polymerization of a monomer mixture of 63 parts butyl acrylate, 35 parts methyl methacrylate, and 2 parts acrylic acid. The pH of the polymer emulsion was 4.7 and the total solids content was 56.4 percent by weight. To a 15 gram sample of the polymer emulsion was added 0.75 grams of a 0.10M aqueous solution of hydrogen peroxide, and 0.25 grams of a concentrated aqueous solution of ammonium hydroxide. The sample was stirred and diluted with deionized water to a total sample weight of 17 grams to form Experimental Latex 1.

### Example 2

Experimental Latex 2 was prepared in a similar manner as Experimental Latex A, except that a sufficient amount of an aqueous solution of ferrous sulfate heptahydrate was added to provide 0.280 parts by weight of ferrous sulfate heptahydrate for every 1000 parts by weight Experimental Latex B.

### Examples 3-25

Experimental Latices 3-25 were prepared in a similar manner as Experimental Latex 2, except that 0.75 grams of 0.1M aqueous solutions of the additive shown in Table 1, below, was also added.

### Polymer Emulsion Color Evaluation

A sample of each of the Experimental Latices was coated onto a glass slide using a draw down bar with a 30 mil gap (0.076 centimeter) to form a film. The films were dried under ambient conditions until dry and were then placed in an oven at 100°C for 1 hour.

The color of the films was evaluated using a Colorgard System 2000 Colorimeter using the CIE L*a*b* color space. Each film was placed face down on the stage of the colorimeter and a white tile as placed on that as a backing. Two or more measurements were made of the b* values on each film, in different locations. The b* value is an indication of the blue-yellow balance where yellowness increases with increasing positive b* values. Measurements were also made on a bare (uncoated) glass slide for comparison. The average b* value for the bare glass slide was subtracted from the average b* value for each sample to give a Delta b* value, reported in Table 1, below.

**TABLE 1**

| Experimental Latex | ADDITIVE | Delta b* |
|---|---|---|
| 1 | None | 0.48 |
| 2 | None | 4.96 |
| 3 | Sodium pyrophosphate | 0.64 |
| 4 | Methylenediphosphonic acid* | 0.67 |
| 5 | 1-Hydroxyethylidene-1,1-diphosphonic acid* | 0.75 |
| 6 | Sodium hexametaphosphate | 0.99 |
| 7 | Aminotris(methylenephosphonic acid)* | 1.05 |
| 8 | 2-Phosphonobutane-1,2,4-tricarboxylic acid* | 1.13 |
| 9 | N-(2-Hydroxyethyl)ethylenediaminetriacetic acid, sodium salt | 1.29 |
| 10 | Ethylenediaminetetrakis(methylenephosphonic acid)* | 1.38 |
| 11 | Diethylenetriamine-N,N,N',N'',N''-penta(methylene | 1.48 |
| | phosphonic acid)* | |
| 12 | Sodium Tripolyphosphate | 1.58 |
| 13 | Phosphoric acid* | 1.95 |
| 14 | Ethylenediaminetetraacetic acid, sodium salt | 2.52 |
| 15 | Phosphonoacetic acid* | 2.59 |
| 16 | 2,6-Pyridinedicarboxylic acids* | 3.00 |
| 17 | Phenylphosphonic acid* | 3.16 |
| 18 | Butylphosphonic acid* | 3.19 |
| 19 | 3- Aminopropylphosphonic acid* | 3.27 |
| 20 | 1-Aminobutylphosphonic acid* | 3.54 |
| 21 | Triethylenetetramine | 3.72 |
| 22 | Glycerol 2-phosphate, sodium salt | 3.76 |
| 23 | 2-Carboxyethyl phosphonic acid* | 4.24 |
| 24 | Triethyl phosphate | 4.54 |
| 25 | Salicylic acid* | 4.82 |

| | | |
|---|---|---|
| *neutralized to pH>7 with concentrated aqueous ammonia hydroxide before to addition. | | |

The data in Table 1 show that films of emulsion polymer containing iron and additives of Formula I have reduced levels of discoloration compared to films of emulsion polymer containing no additive or containing additives other than those of Formula I.

### Examples 26-28

Examples 26, 27 and 28 were conducted in the same manner as Examples 1, 2 and 5 respectively.

### Examples 29-32

Examples 29-32 were conducted in a similar manner as Example 5 except that the amount of the additive solution used and the molar concentration of the additive solution was that shown in Table 2, below. The Delta b* values of films prepared in the same manner described above and measured in the same manner described above are reported in Table 2, below.

**TABLE 2**

| Example | Additive Solution Concentration (molar) | Amount Additive Solution (grams) | Additive/Fe (mole ratio) | Delta b* |
|---|---|---|---|---|
| 26 | - | 0 | | 0.58 |
| 27 | - | 0 | | 4.45 |
| 29 | 0.010 | 0.03 | 0.2 | 3.90 |
| 30 | 0.010 | 0.75 | 0.5 | 2.99 |
| 31 | 0.10 | 0.15 | 1 | 1.59 |
| 28 | 0.10 | 0.75 | 5 | 0.75 |
| 32 | 0.50 | 0.5 | 25 | 0.55 |

The data in Table 2 show that additives of Formula I are effective at substantially reducing the discoloration of films of emulsion polymer containing iron at additive levels greater than 0.2 moles of additive per mole of iron. The data also show that the discoloration of the films of emulsion polymer containing iron improves as the concentration of the additive of Formula I increases.

## Claims

1. A composition comprising
(a) at least one polymer at a level of from 30 to 70 percent by weight of the composition;
(b) at least one solvent at a level of from 30 to 70 percent by weight of the composition;
(c) at least one iron-containing compound at a level of from 1 to 10,000 parts per million ("ppm") based on the composition;
(d) at least one additive selected from the group consisting of
1) phosphoric acid
2) phosphates
3) polyphosphates
4) n-phosphonoalkyl-n-carboxylic acids
5) *gem*-diphosphonoalkanes
6) *gem*-diphosphonohydroxyalkanes
7) compounds containing one or more aminedi(methylenephosphonic acid) moieties
8) compounds soluble in the solvent of the composition which have two or more pendant phosphate monoester moieties
9) compounds containing one or more aminedi(methylenephosphonic acid) moieties
10) compounds containing one or more aminedi(methylenecarboxylic acid) moieties
and alkali metal and ammonium salts thereof;
wherein the additive is present in the composition at a level of from 10 to 5,000 ppm based on the polymer.

2. The composition of claim 1, wherein the polymer is an emulsion polymer and wherein the solvent is water.

3. The composition of claims 1 or 2, wherein the additive is selected from the group consisting of: phosphoric acid, phosphate, pyrophosphate, tripolyphosphate, hexametaphosphate, tetrametaphosphate, pentametaphosphate, phosphonoacetic acid, 2-phosphonobutane-1,2,4-tricarboxylic acid, 2-hydroxy-2-phosphonoacetic acid, methylenediphosphonic acid, 1-hydroxyethylidene-1,1-diphosphonic acid, aminotris(methylenephosphonic acid), ethylenediaminetetrakis(methylenephosphonic acid), diethylenetriamine-N,N,N',N'',N''-penta(methylene phosphonic acid), N-(2-hydroxyethyl)ethylenediaminetriacetic acid, ethylenediaminetetraacetic acid, nitrilotris(methylenecarboxylic acid) and alkali metal and ammonium salts thereof.

4. A film comprising
(a) at least one polymer at a level of from 30 to 99.99 percent by weight of the film;
(b) optionally, at least one pigment at a level of from 0 to 70 percent by weight of the film;
(c) at least one iron-containing compound at a level of from 2 to 20,000 ppm based on the film;
(d) at least one additive selected from the group consisting of
1) phosphoric acid
2) phosphates
3) polyphosphates
4) n-phosphonoalkyl-n-carboxylic acids
5) *gem*-diphosphonoalkanes
6*) gem*-diphosphonohydroxyalkanes
7) compounds containing one or more aminedi(methylenephosphonic acid) moieties
8) compounds soluble in the solvent of the composition which have two or more pendant phosphate monoester moieties
9) compounds containing one or more aminedi(methylenephosphonic acid) moieties
10) compounds containing one or more aminedi(methylenecarboxylic acid) moieties
and alkali metal and ammonium salts thereof;
wherein the additive is present in the composition at a level of from 10 to 5,000 ppm based on the polymer.

5. The film of claim 4, wherein the additive is selected from the group consisting of: phosphoric acid, phosphate, pyrophosphate, tripolyphosphate, hexametaphosphate, tetrametaphosphate, pentametaphosphate, phosphonoacetic acid, 2-phosphonobutane-1,2,4-tricarboxylic acid, 2-hydroxy-2-phosphonoacetic acid, methylenediphosphonic acid, 1-hydroxyethylidene-1,1-diphosphonic acid, aminotris(methylenephosphonic acid), ethylenediaminetetrakis(methylenephosphonic acid), diethylenetriamine-N,N,N',N'',N''-penta(methylene phosphonic acid), N-(2-hydroxyethyl)ethylenediaminetriacetic acid, ethylenediaminetetraacetic acid, nitrilotris(methylenecarboxylic acid) and alkali metal and ammonium salts thereof.

6. A method for reducing the discoloration of iron-containing polymer compositions, comprising adding to a polymer composition an effective amount of at least one of the additives selected from the group consisting of
1) phosphoric acid
2) phosphates
3) polyphosphates
4) n-phosphonoalkyl-n-carboxylic acids
5) *gem*-diphosphonoalkanes
6) *gem*-diphosphonohydroxyalkanes
7) compounds containing one or more aminedi(methylenephosphonic acid) moieties
8) compounds soluble in the solvent of the composition which have two or more pendant phosphate monoester moieties
9) compounds containing one or more aminedi(methylenephosphonic acid) moieties
10) compounds containing one or more aminedi(methylenecarboxylic acid) moieties
and alkali metal and ammonium salts thereof.

7. The method of claim 6 wherein the additive is selected from the group consisting of: phosphoric acid, phosphate, pyrophosphate, tripolyphosphate, hexametaphosphate, tetrametaphosphate, pentametaphosphate, phosphonoacetic acid, 2-phosphonobutane-1,2,4-tricarboxylic acid, 2-hydroxy-2-phosphonoacetic acid, methylenediphosphonic acid, 1-hydroxyethylidene-1,1-diphosphonic acid, aminotris(methylenephosphonic acid), ethylenediaminetetrakis(methylenephosphonic acid), diethylenetriamine-N,N,N',N'',N''-penta(methylene phosphonic acid), N-(2-hydroxyethyl)ethylenediaminetriacetic acid, ethylenediaminetetraacetic acid, nitrilotris(methylenecarboxylic acid) and alkali metal and ammonium salts thereof.

8. The method of claims 6 or 7, wherein the additive is present at a level of from 10 to 5,000 ppm based on the polymer.
